# FASCICULE DE BREVET EUROPEEN

(11) **EP 4 188 654 B1**
(45) Date de publication et mention de la délivrance du brevet: **31.12.2025**
(21) Numéro de dépôt: 21749674.4
(22) Date de dépôt: 12.07.2021
(51) Int. Cl.: B25J 15/06, B25J 19/00

(54) **CAISSON D'ASPIRATION POUR UN PRÉHENSEUR**
SAUGKAMMER FÜR EINEN GREIFER
SUCTION CHAMBER FOR A GRIPPER

(30) Priorité: 28.07.2020 FR 2007944
(43) Date de publication de la demande: 07.06.2023
(73) Titulaire: Defitech, 73410 Entrelacs (FR)
(72) Inventeur: BOUVAIS, Vincent, 73410 Entrelacs (FR)
(74) Mandataire: Germain Maureau
(86) Numéro de dépôt international: PCT/FR2021/051291
(87) Numéro de publication internationale: WO 2022/023637

(56) Documents cités:
- WO-A1-2019/175854
- US-A1- 2018 215 048
- US-A1- 2020 130 957

## Description

### Domaine technique de l'invention

Le domaine technique de l'invention concerne un caisson d'aspiration pour un préhenseur.

### État de la technique

Il est connu d'utiliser un dispositif de manutention comportant un organe mobile et un préhenseur monté sur l'organe mobile. L'organe mobile est, par exemple, un vérin de levage, un tube de levage, un palan, un bras articulé ou un portique de levage. Le préhenseur peut saisir un ou des objets qui peuvent ensuite être déplacés par actionnement de l'organe mobile.

Le préhenseur peut saisir un objet en utilisant une technique de préhension par le vide. À cet effet, le préhenseur peut comporter un caisson d'aspiration couplé à un dispositif de génération de vide, aussi appelé générateur de vide. Le générateur de vide a pour fonction de créer une dépression permettant d'évacuer l'air présent dans le caisson d'aspiration en vue d'assurer la préhension d'un ou plusieurs objets à l'aide d'un ou plusieurs organes fixés sur le caisson d'aspiration. L'organe ou chaque organe est agencé pour coopérer avec au moins un orifice du caisson d'aspiration de sorte à maintenir par aspiration l'objet à saisir par rapport au préhenseur. Ainsi, cet organe ou chaque organe peut venir au contact de l'objet à saisir, puis une aspiration est générée, notamment grâce au générateur de vide, de telle sorte que l'objet est saisi par le préhenseur et est maintenu par rapport au préhenseur même lors de mouvements de l'organe mobile.

De manière générale, il est cherché à limiter le poids du préhenseur. Une diminution du poids du préhenseur permet d'augmenter la charge utile du dispositif de manutention, c'est-à-dire le poids que peut porter le dispositif de manutention. Alternativement, en diminuant le poids du préhenseur, il est possible d'utiliser, pour un poids défini d'objets à saisir successivement par le dispositif de manutention, un dispositif de manutention moins puissant et moins coûteux en composants. À cet effet, il est connu un caisson d'aspiration en trois parties formées respectivement par une première plaque, une entretoise et une deuxième plaque, l'entretoise séparant les première et deuxième plaques. Les première et deuxième plaques peuvent être chacune en aluminium ou en inox ou en acier ou en matériau composite comportant des fibres de carbone. L'entretoise peut être en polyuréthane ou en mousse PVC (PVC étant le sigle de Polychlorure de vinyle) dure de sorte à s'opposer à son écrasement. La première plaque, l'entretoise et la deuxième plaque sont fixées entre elles par vis ou rivets.

Le document WO 2019/175854 A1 décrit un plateau à vide comprenant deux plaques opposées reliées par une structure de renforcement. Le document US 2020/130957 A1 fait également partie de l'état de la technique.

### Objet de l'invention

L'invention a pour but de trouver une solution permettant de répondre à une problématique technique relative au poids d'un caisson d'aspiration pour un préhenseur. En ce sens, il est cherché une solution permettant de tendre vers une limitation du poids du caisson d'aspiration tout en permettant de conserver une robustesse satisfaisante de ce caisson d'aspiration.

L'invention est définie par les revendications 1 et 14.

À cet effet, l'invention est relative à un caisson d'aspiration pour un préhenseur, le caisson d'aspiration comportant :
- une première partie en matériau composite,
- une deuxième partie en matériau composite, la deuxième partie comportant des orifices, et
- une troisième partie reliée, d'une part, à la première partie et, d'autre part, à la deuxième partie pour former au moins une cavité du caisson d'aspiration,
la troisième partie étant en matériau composite, la première partie et la troisième partie étant reliées entre elles par collage, et la deuxième partie et la troisième partie étant reliées entre elles par collage.

Ainsi, l'avantage de ce caisson d'aspiration est que son poids est limité tout en présentant une rigidité satisfaisante. En effet, le collage permet de remplacer les vis et rivets évoqués dans la partie état de la technique d'où il résulte un gain de poids. En outre, le collage présente aussi l'avantage d'éviter la formation de trous pour solidariser les parties à l'aide des rivets ou des vis qui induiraient la présence de zones de fragilisation du caisson d'aspiration en cas d'efforts en cisaillement appliqués orthogonalement aux axes longitudinaux des vis ou des rivets.

Le caisson d'aspiration comporte en outre des caractéristiques suivantes :
- la troisième partie comporte une boucle fermée s'étendant à la périphérie d'une première face de la première partie et à la périphérie d'une deuxième face de la deuxième partie, la première face étant orientée vers la deuxième face, la première partie étant fixée à la boucle fermée par collage et la deuxième partie étant fixée à la boucle fermée par collage ;

Le caisson d'aspiration peut comporter en outre une ou plusieurs des caractéristiques suivantes :
- la première partie et la deuxième partie se présentent chacune sous la forme d'une plaque, et la troisième partie est une plaque trouée ;
- le matériau composite de la troisième partie comporte une matrice et des fibres ;
- le matériau composite de la première partie comporte une matrice et des fibres ;
- le matériau composite de la deuxième partie comporte une matrice et des fibres ;
- chaque fibre est choisie parmi : une fibre de carbone, une fibre de verre et une fibre d'aramide ;
- la première partie et la troisième partie sont collées par une résine époxy ou par une colle époxy, et la deuxième partie et la troisième partie sont collées par une résine époxy ou par une colle époxy ;
- les première, deuxième et troisième parties sont agencées de sorte que le caisson d'aspiration comporte : une quatrième partie, des bras s'étendant chacun depuis la quatrième partie et des têtes d'aspiration creuses, chaque tête d'aspiration étant agencée au bout d'un des bras à l'opposé de la quatrième partie et chaque tête d'aspiration comportant une partie des orifices ;
- la quatrième partie et les bras sont creux, la quatrième partie comporte une ouverture ménagée au travers de la première partie, et pour chaque tête d'aspiration, l'intérieur de la tête d'aspiration est en communication fluidique avec l'intérieur du bras au bout duquel ladite tête d'aspiration est agencée et avec l'intérieur de la quatrième partie de sorte que chaque orifice est en communication fluidique avec l'ouverture ;
- au moins un des orifices débouche dans ladite au moins une cavité et la première partie comporte une ouverture communiquant avec ladite au moins une cavité ;
- la troisième partie comporte un assemblage de plusieurs éléments.

L'invention est aussi relative à un préhenseur comportant le caisson d'aspiration tel que décrit et au moins un organe destiné à venir au contact d'au moins un objet à saisir, ledit organe étant fixé sur la deuxième partie.

L'invention est aussi relative au dispositif de manutention, caractérisé en ce qu'il comporte un organe mobile et le préhenseur tel que décrit, le préhenseur étant monté sur l'organe mobile.

L'invention est aussi relative à un procédé de fabrication d'un caisson d'aspiration pour un préhenseur, le procédé de fabrication comportant les étapes suivantes :
- une étape de formation d'une première partie en matériau composite,
- une étape de formation d'une deuxième partie en matériau composite, la deuxième partie comportant des orifices,
- une étape de formation d'une troisième partie, la troisième partie étant en matériau composite,
- une étape d'assemblage des première, deuxième et troisième parties d'où il résulte une formation d'au moins une cavité du caisson d'aspiration, l'étape d'assemblage comportant une étape de fixation de la première partie à la troisième partie par collage et une étape de fixation de la deuxième partie à la troisième partie par collage.

Le procédé de fabrication peut aussi comporter une étape de formation d'éléments destinés à être assemblés pour former la troisième partie et une étape d'assemblage des éléments pour former la troisième partie, lesdits éléments étant formés par découpe d'une plaque de matériau composite ou par fabrication additive.

D'autres avantages et caractéristiques pourront ressortir de la description détaillée qui suit.

### Description sommaire des dessins

L'invention sera mieux comprise à la lecture de la description détaillée qui suit, donnée uniquement à titre d'exemple non limitatif et faite en se référant aux dessins annexés et listés ci-dessous.
La figure 1 illustre, selon une vue schématique, un dispositif de manutention de type robot de préhension équipé d'un préhenseur à caisson d'aspiration selon un mode de réalisation de l'invention.
La figure 2 illustre, selon une vue en perspective, un préhenseur comportant un caisson d'aspiration, ce caisson d'aspiration étant selon un premier mode de réalisation de l'invention.
La figure 3 illustre, selon une vue en perspective éclatée, le préhenseur de la figure 2.
La figure 4 illustre, selon une vue en perspective, le préhenseur dont le caisson d'aspiration est selon un deuxième mode de réalisation de l'invention.
La figure 5 illustre, selon une vue en perspective éclatée, le préhenseur de la figure 4.
La figure 6 illustre une vue en coupe partielle à un bord du caisson d'aspiration selon une réalisation de l'invention.
La figure 7 illustre des éléments séparés destinés à former une partie du caisson d'aspiration selon un mode de réalisation particulier de l'invention.
La figure 8 illustre les éléments de la figure 7 assemblés.

Sur ces figures, les mêmes références sont utilisées pour désigner les mêmes éléments.

### Description détaillée

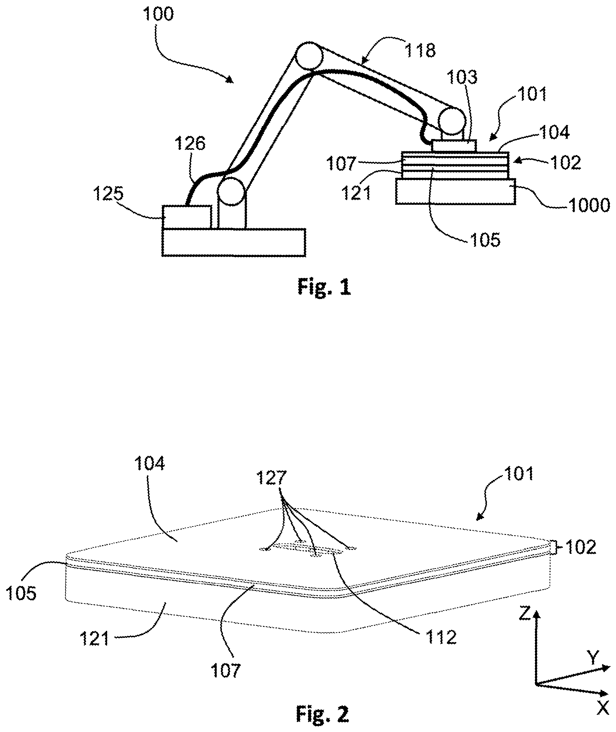

La préhension d'un objet 1000, tel que par exemple visible en figure 1, par un préhenseur 101 permet de saisir l'objet 1000 en vue de le manipuler et/ou de le déplacer.

L'invention est relative à un caisson 102 d'aspiration pour le préhenseur 101. Deux réalisations particulières du préhenseur 101 sont illustrées en figures 2 à 5. Le caisson 102 d'aspiration est aussi appelé caisson à vide dans le domaine technique de la présente invention.

Le préhenseur 101 peut comporter un dispositif 103 de génération de vide, aussi appelé générateur de vide dans le domaine technique de la présente invention, dont un exemple est visible en figure 1. En fait, le dispositif 103 de génération de vide peut être intégré au préhenseur 101, par exemple dans ce cas le dispositif 103 de génération de vide peut comporter une cartouche venturi solidaire du caisson 102 d'aspiration. Alternativement, le dispositif 103 de génération de vide est séparé du préhenseur 101, il est alors considéré comme déporté et peut être relié au préhenseur 101 au moyen d'un tuyau permettant d'aspirer le contenu du caisson 102 d'aspiration. Ainsi, de manière plus générale le caisson 102 d'aspiration peut être couplé au dispositif 103 de génération de vide par montage direct du dispositif 103 de génération de vide sur le caisson 102 d'aspiration ou par l'intermédiaire du tuyau reliant le caisson 102 d'aspiration au dispositif 103 de génération de vide.

En ce sens, bien que les figures 2 à 5. ne montrent pas le préhenseur 101 avec le dispositif 103 de génération de vide, le dispositif 103 de génération de vide pourrait être monté sur le caisson 102 d'aspiration comme par exemple illustré en figure 1 pour être intégré au préhenseur 101.

La figure 1 illustre schématiquement un dispositif 100 de manutention comportant le préhenseur 101. Un tel dispositif 100 de manutention permet, après avoir saisi l'objet 1000 via le préhenseur 101, de déplacer cet objet 1000 avant de relâcher cet objet 1000.

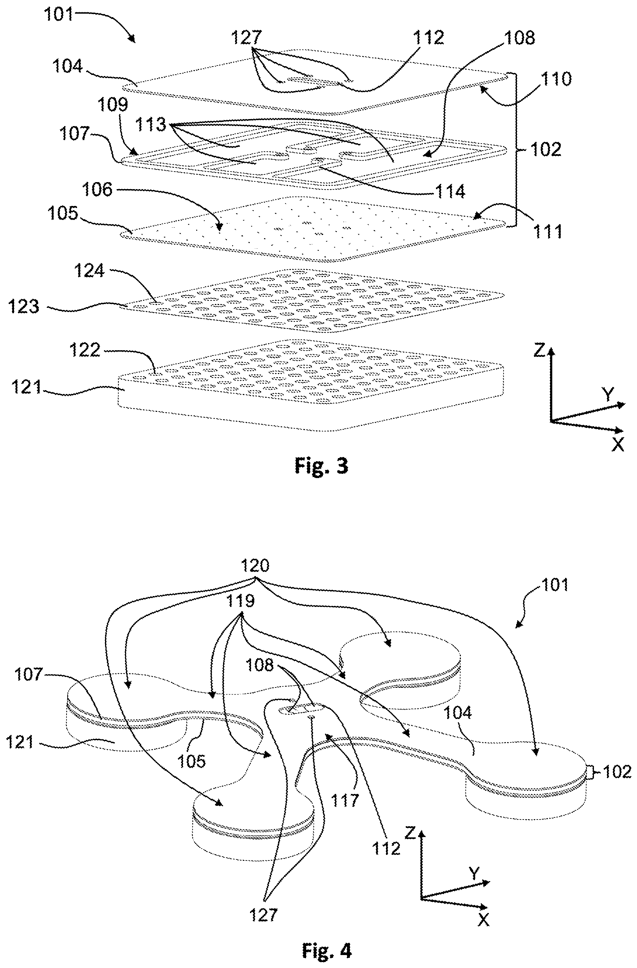

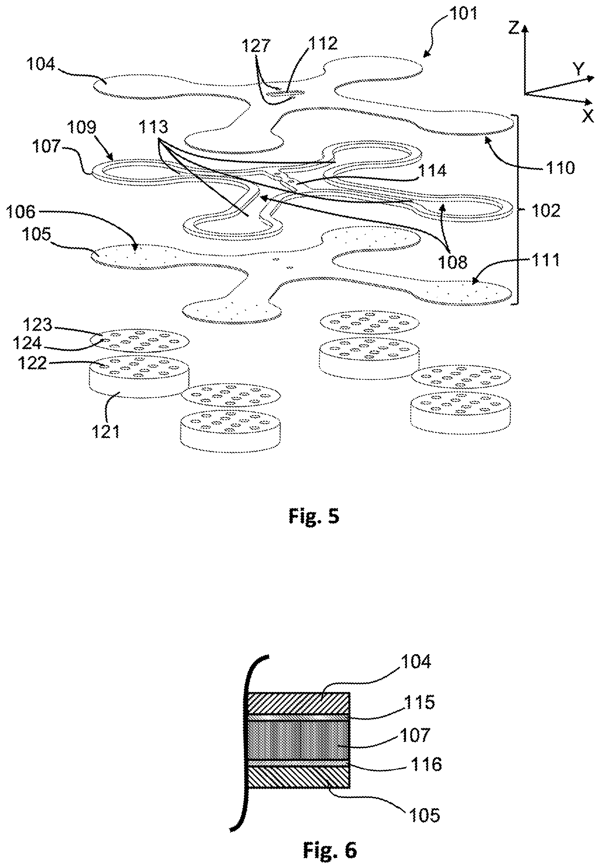

Il est défini un repère orthonormé XYZ du préhenseur 101 représenté par les axes X, Y et Z aux figures 2 à 5.. En particulier, les vues éclatées visibles en figures 3 et 5 sont représentées en échelonnant les pièces, respectivement visibles en figures 2 et 4, du préhenseur dans une direction parallèle à l'axe Z. Chaque épaisseur évoquée dans la présente description est une dimension parallèle à l'axe Z.

Le caisson 102 d'aspiration comporte une première partie 104 en matériau composite et une deuxième partie 105 en matériau composite. L'avantage d'utiliser des première et deuxième parties 104, 105 chacune en matériau composite est qu'il est possible de diminuer leur masse tout en conservant une rigidité adaptée de ces première et deuxième parties 104, 105.

La deuxième partie 105 comporte des orifices 106 (par exemple visibles aux figures 3 et 5 sur lesquels les orifices 106 sont schématisés par des points) aussi appelés orifices d'aspiration pour la saisie de l'objet 1000. Ces orifices 106 sont destinés à participer à la saisie de l'objet 1000 et au maintien, par rapport au préhenseur 101, de l'objet 1000 saisi par aspiration ou succion.

En fait, la fonction du dispositif 103 de génération de vide est d'aspirer à intérieur du caisson 102 d'aspiration ce qui peut provoquer une aspiration, le cas échéant, via les orifices 106 ou via une pluralité de ces orifices 106.

De préférence, les orifices 106 sont agencés de sorte à permettre, lors de la préhension, l'aspiration d'air extérieur au caisson 102 d'aspiration dans le caisson 102 d'aspiration. Ainsi, les orifices 106 peuvent traverser chacun la deuxième partie 105, notamment selon son épaisseur. Ainsi, chaque orifice 106 débouche, d'une part, dans le caisson 102 d'aspiration et, d'autre part, à l'extérieur du caisson 102 d'aspiration. Les orifices 106 sont donc formés par des trous débouchants ménagés dans la deuxième partie 105.

La section, la forme et l'espacement des orifices 106 peuvent varier en fonction des besoins techniques liés à l'objet 1000 à saisir et à déplacer.

Le caisson 102 d'aspiration comporte une troisième partie 107 reliée, d'une part, à la première partie 104 et, d'autre part, à la deuxième partie 105 pour former, c'est-à-dire formant ainsi, au moins une cavité 108 du caisson 102 d'aspiration. Autrement dit, l'assemblage des première, deuxième et troisième parties 104, 105, 107 délimite ladite au moins une cavité 108, c'est-à-dire la ou chaque cavité 108. Ainsi, le caisson 102 d'aspiration peut comporter une ou plusieurs cavités 108. La troisième partie 107 est en matériau composite. La première partie 104 et la troisième partie 107 sont reliées entre elles par collage. Autrement dit, la première partie 104 et la troisième partie 107 sont fixées entre elles par collage. La deuxième partie 105 et la troisième partie 107 sont reliées entre elles par collage. Autrement dit, la deuxième partie 105 et la troisième partie 107 sont fixées entre elles par collage. L'utilisation des première, deuxième et troisième parties 104, 105, 107 chacune en matériau composite et assemblées par collage de la première partie 104 à la troisième partie 107 et par collage de la deuxième partie 105 à la troisième partie 107 présente un ou plusieurs des avantages suivants :
- cela permet, notamment en comparaison à un assemblage par fixation mécanique utilisant des vis ou des rivets, de rigidifier et donc de réduire les phénomènes de déformation des première, deuxième et troisième parties 104, 105, 107 grâce au collage de ces première et deuxième parties 104, 105 sur la troisième partie 107 et grâce à l'utilisation d'un matériau composite pour former la troisième partie 107,
- cela permet de réduire l'encombrement, notamment l'épaisseur, du caisson 102 d'aspiration et donc du préhenseur 101 en tenant compte d'une raideur souhaitée du caisson 102 d'aspiration, ceci permettant donc une meilleure intégration du préhenseur 101 comportant un tel caisson 102 d'aspiration,
- cela permet de réduire le poids du caisson 102 d'aspiration par rapport à un assemblage par fixation mécanique avec des vis ou des rivets,
- cela permet de réduire la consommation d'énergie du dispositif 100 de manutention pour déplacer le préhenseur 101 notamment du fait de la réduction de poids obtenue par l'assemblage par collage en comparaison à un assemblage par rivets ou vis,
- cela permet de gagner, pour le dispositif 100 de manutention, en capacité de levage ou de manipulation d'objet(s),
- cela permet au dispositif 100 de manutention équipé d'un tel caisson 102 d'aspiration d'avoir des mécanismes de manipulation choisis pour réduire ses coûts de fabrication, de maintenance et d'utilisation.

Il résulte de ce qui a été décrit précédemment que la première partie 104 est collée sur la troisième partie 107 et que la deuxième partie 105 est collée sur la troisième partie 107 de sorte à assurer un maintien des première, deuxième et troisième parties 104, 105, 107 les unes par rapport aux autres : elles sont alors solidaires entre elles.

En particulier, les première, deuxième et troisième parties 104, 105, 107 peuvent former des parois extérieures du caisson 102 d'aspiration.

De préférence, la troisième partie 107 est agencée entre la première partie 104 et la deuxième partie 105.

Les première et deuxième parties 104, 105 peuvent être des plaques et leur collage respectif sur la troisième partie 107 permet, tout en conservant une rigidité satisfaisante, de réduire l'épaisseur de ces plaques, offrant ainsi un gain d'épaisseur du caisson 102 d'aspiration et donc un gain de poids du caisson 102 d'aspiration.

L'épaisseur de la première partie 104, l'épaisseur de la deuxième partie 105 et l'épaisseur de de la troisième partie 107 seront bien entendu à adapter en fonction des besoins.

De préférence, la troisième partie 107 comporte une boucle 109 fermée, comme l'illustrent par exemple les figures 3 et 5, formant notamment une bordure extérieure de la troisième partie 107. Cette boucle fermée 109 s'étend à la périphérie d'une première face 110 de la première partie 104 et d'une deuxième face 111 de la deuxième partie 105. La première face 110 est orientée vers la deuxième face 111. La première partie 104, notamment la première face 110, est fixée à la boucle 109 fermée par collage. La deuxième partie 105, notamment la deuxième face 111, est fixée à la boucle 109 fermée par collage. Cette boucle 109 fermée forme une paroi latérale du caisson 102 d'aspiration et présente l'avantage de permettre, notamment en coopération avec les première et deuxième parties 104, 105, et le cas échéant avec la matière assurant le collage fixant les première et deuxième parties 104, 105 à la troisième partie 107, de fermer latéralement le caisson 102 d'aspiration. De préférence, la première partie 104 et la deuxième partie 105 se présentent ici chacune sous la forme d'une plaque. La troisième partie 107 peut être une plaque trouée. Cette plaque trouée, pouvant aussi être appelée plaque évidée, comporte un ou plusieurs trous, ou un ou plusieurs évidements, traversant la plaque trouée selon son épaisseur. En fait, la plaque trouée formant la troisième partie 107 peut permettre une mise en communication fluidique de tout ou partie des orifices 106 avec une ouverture 112 ménagée dans la première partie 104. L'ouverture 112 est destinée à coopérer avec le, c'est-à-dire à être couplée au, dispositif 103 de génération de vide qui, en fonctionnement, aspire l'intérieur du caisson 102 d'aspiration au travers de cette ouverture 112, notamment pour tendre à faire le vide dans la ou chaque cavité 108, afin de permettre une aspiration au travers des orifices 106. Le caisson 102 d'aspiration formé à l'aide des première, deuxième et troisième parties 104, 105, 107 sous forme de plaques assemblées par collage permet d'obtenir un caisson 102 d'aspiration robuste et notamment à épaisseur limitée.

La troisième partie 107 a notamment aussi pour fonction de former une entretoise permettant de délimiter latéralement, c'est-à-dire parallèlement au plan XY, l'intérieur du caisson 102 d'aspiration et ainsi former préférentiellement une réserve de vide. De préférence, la fixation par collage de la troisième partie 107 aux première et deuxième parties 104, 105 assure l'étanchéité du caisson 102 d'aspiration latéralement de sorte que lors du fonctionnement du préhenseur 101, l'air aspiré depuis l'extérieur du caisson 102 d'aspiration vers l'intérieur du caisson 102 d'aspiration le soit uniquement au travers des orifices 106.

En fait, la troisième partie 107 peut former une ossature destinée à recevoir les première et deuxième parties 104, 105 de sorte que l'assemblage des première, deuxième et troisième parties 104, 105, 107 délimite un volume interne du caisson 102 d'aspiration permettant, de préférence, de mettre en communication fluidique les orifices 106 avec l'ouverture 112 ou des ensembles d'orifices 106 chacun avec une ouverture 112 correspondante.

Un avantage de la troisième partie 107, notamment lorsqu'elle forme l'ossature, est qu'elle permet aisément de compartimenter le caisson 102 d'aspiration de sorte à ce que ce dernier comporte plusieurs cavités 108 indépendantes aussi appelées chambres d'aspiration. Dans ce cas, il peut être utilisé un dispositif 103 de génération de vide commun pour aspirer dans toutes les cavités 108 ou une pluralité de dispositifs 103 de génération de vide pouvant chacun aspirer dans une des cavités 108 qui lui est associée (non représenté) : il est ainsi possible dans le cadre de la préhension d'un ou de plusieurs objets 1000 de sélectionner les cavités 108 qui participeront à la préhension du ou des objets 1000.

Ainsi, de manière générale, au moins un des orifices 106 peut déboucher dans ladite au moins une cavité 108 et la première partie 104 peut comporter l'ouverture 112 communiquant avec, notamment débouchant dans, ladite au moins une cavité 108. Autrement dit, la ou chaque cavité 108 peut communiquer avec au moins l'un des orifices 106 et avec une ouverture 112 correspondante ménagée dans la première partie 104. La première partie 104 peut comporter une seule ouverture 112 communiquant avec plusieurs cavités 108 (voir par exemple les figures 4 et 5) ou une ouverture 112 pour chaque cavité 108 (non représenté).

L'ossature permet aussi de délimiter des canaux 113 de circulation d'air dans le caisson 102 d'aspiration.

Le Caisson 102 d'aspiration peut comporter un ou des renforts 114 dits « renforts structurels » améliorant la rigidité de la troisième partie 107 et donc la rigidité du caisson 102 d'aspiration. Le ou les renforts 114 peuvent être fixés chacun par collage, d'une part, à la première partie 104 et, d'autre part, à la deuxième partie 105.

Les renforts 114 peuvent participer à délimiter, par exemple à l'aide de la boucle 109 fermée, les canaux 113 (voir par exemple les figures 3 et 5) de circulation d'air dans le caisson 102 d'aspiration. Par exemple, quatre renforts 114 sont illustrés en figure 3 pour délimiter des canaux 113 d'une même cavité 108 et un renfort 114 est illustré en figure 5.

Les renforts 114 peuvent permettre de compartimenter l'intérieur du caisson 102 d'aspiration en formant des cloisons reliées/fixées chacune, notamment par collage, à la première partie 104 et à la deuxième partie 105.

La troisième partie 107 peut donc comporter la boucle 109 fermée et un ou plusieurs renforts 114 qui s'étendent par exemple sous forme de branches depuis la boucle 109 fermée.

En figure 5, le caisson 102 d'aspiration comporte deux cavités 108 communiquant chacune avec l'ouverture 112 de la première partie 104. Ces deux cavités 108 sont séparées par un renfort 114 servant notamment à empêcher l'écrasement du caisson 102 lors de sa fixation à un organe 118 mobile du dispositif 100 de manutention et/ou lors du couplage du dispositif 103 de génération de vide au caisson 102 d'aspiration.

Ainsi, la forme, le nombre et les dimensions des renforts 114 peuvent varier en fonction des besoins pour assurer la rigidité du caisson 102 d'aspiration et, le cas échéant, empêcher son écrasement parallèlement à l'axe Z.

Il a été évoqué précédemment que la première partie 104, la deuxième partie 105 et la troisième partie 107 étaient chacune en matériau composite. Il est entendu par cela que la première partie 104, la deuxième partie 105 et la troisième partie 107 sont réalisées chacune dans un matériau composite. Le matériau composite peut être le même pour la première partie 104, la deuxième partie 105 et la troisième partie 107 ou peut être différent entre deux de ces parties. Ainsi, le matériau composite de la troisième partie 107 peut comporter une matrice et des fibres, et/ou le matériau composite de la première partie 104 comporte une matrice et des fibres, et/ou le matériau composite de la deuxième partie 105 peut comporter une matrice et des fibres. Ceci présente l'avantage de renforcer la rigidité, le cas échéant, de la première partie 104 et/ou de la deuxième partie 105 et/ou de la troisième partie 107.

Chaque fibre peut être choisie parmi : une fibre de carbone, une fibre de verre et une fibre d'aramide (par exemple du Kevlar^{®}). Autrement dit, au sein de chacune des première, deuxième et troisième parties 104, 105, 107 les fibres peuvent être d'un même matériau ou différents matériaux peuvent être utilisés. De telles fibres présentent l'avantage d'assurer une rigidité satisfaisante du caisson 102 d'aspiration tout permettant de limiter son poids. Un avantage des fibres de carbone et/ou de verre et/ou d'aramide dans le matériau composite formant la partie correspondante (première partie 104, deuxième partie 105 ou troisième partie 107) est que cette partie peut présenter une déformation avant altération plus importante que si elle était en aluminium ou en acier.

Le matériau composite peut comporter une armure sergé 3K. Il peut notamment s'agir d'une armure de carbone sergé 3K.

De préférence, la première partie 104 et la troisième partie 107 sont collées par une résine époxy, et la deuxième partie 105 et la troisième partie 107 sont collées par une résine époxy. En parlant de deux choses, ici des parties, collées par la résine époxy, il est entendu que la résine époxy est dans un état durci où elle assure le maintien des deux choses collées entre elles. Bien que la résine époxy ne soit pas représentée aux figures 2 à 5., une vue en coupe, selon le plan XZ au niveau d'un bord latéral du caisson 102 d'aspiration, peut être schématiquement représentée comme en figure 6. La figure 6 montre donc un premier film 115 de résine époxy à l'état durci collant la première partie 104 à la troisième partie 107 et un deuxième film 116 de résine époxy à l'état durci collant la deuxième partie 105 à la troisième partie 107. L'avantage d'utiliser de la résine époxy pour le collage est cela permet d'assurer un maintien adéquat des première, deuxième et troisième parties 104, 105, 107 entre elles et que ce collage s'oppose au délaminage des première, deuxième et troisièmes parties 104, 105, 107. Bien entendu la résine époxy peut coller la boucle 109 fermée, d'une part, à la première partie 104 (notamment à la première face 110) et, d'autre part, à la deuxième partie 105 (notamment à la deuxième face 111).

Par « résine époxy à l'état durci », il est entendu un polymère obtenu au terme d'un durcissement d'un polymère thermodurcissable à l'état liquide comportant une résine et un durcisseur.

Alternativement, chaque collage évoqué dans la présente description peut être réalisé par une colle époxy à la place de la résine époxy. Ainsi, les « termes résine époxy » peuvent être remplacés par les termes « colle époxy » dans le cadre de collage deux choses comme par exemple les première et troisième parties 104, 107 entre elles ou les deuxième et troisième parties 105, 107 entre elles. La colle époxy est adaptée pour assurer les collages recherchés dans la présente description.

Dans la présente description, par « des choses reliées ou fixées par collage », il est notamment entendu qu'une matière assure le collage correspondant, cette matière pouvant être de la résine époxy à l'état durci ou de la colle époxy. En particulier, l'épaisseur de cette matière est adaptée en fonction des besoins pour assurer un collage satisfaisant.

En particulier, la matrice de chacune des première, deuxième et troisième parties 104, 105, 107 est en résine époxy à l'état durci. Dans ce cas, la résine époxy collant, d'une part, la première partie 104 à la troisième partie 107 et, d'autre part, la deuxième partie 105 à la troisième partie 107 peut être identique à la résine époxy formant les matrices. Ceci présente l'avantage d'assurer un meilleur collage de la première partie 104 sur la troisième partie 107 et de la deuxième partie 105 sur la troisième partie 107.

Le caisson 102 d'aspiration des figures 2 et 3 présente, vu parallèlement à l'axe Z, un profil rectangulaire. Ceci est tout particulièrement adapté pour un préhenseur 101 destiné à saisir un carton, une planche, un panneau ou tout autre objet solide. Bien entendu, les dimensions et les formes du caisson 102 d'aspiration peuvent être adaptées en fonction des dimensions et du poids de l'objet 1000 à saisir. Ainsi, le caisson 102 d'aspiration peut tout aussi bien présenter, vu parallèlement à l'axe Z, un profil carré, un profil rond ou un profil ovale.

Avantageusement, pour encore gagner du poids au niveau du caisson 102 d'aspiration, le caisson 102 d'aspiration peut présenter, vu parallèlement à l'axe Z, un profil plus complexe qu'un simple rectangle, carré, rond ou ovale. L'utilisation d'un tel profil plus complexe est rendu plus facile à mettre en œuvre du fait de l'utilisation des première, deuxième et troisième parties 104, 105, 107 assemblées par collage tout en conservant la rigidité et la solidité souhaitées du préhenseur 101. La forme du caisson 102 d'aspiration peut alors être adaptée au besoin. En effet, il est ainsi possible de réduire la surface extérieure du caisson 102 d'aspiration au strict minimum pour assurer la fonction du caisson 102 d'aspiration avec à la clé une réduction du poids du caisson 102 d'aspiration. Dans ce cas, les première, deuxième et troisième parties 104, 105, 107 peuvent être agencées/assemblées de sorte que le caisson 102 d'aspiration comporte (comme par exemple visible en figure 4) :
- une quatrième partie 117, par exemple formant une partie centrale, notamment destinée à être reliée à l'organe 118 (figure 1) mobile du dispositif 100 de manutention et/ou au dispositif 103 de génération de vide,
- des bras 119 s'étendant chacun depuis la quatrième partie 117,
- des têtes 120 d'aspiration creuses.

Chaque tête 120 d'aspiration, alors agencée au bout d'un des bras 119 à l'opposé de la quatrième partie 117, comporte une partie des orifices 106 (en particulier chaque tête 120 comporte plusieurs des orifices 106). Le ou chaque orifice 106 de ladite tête 120 d'aspiration débouchant dans un espace creux de ladite tête 120 d'aspiration, en particulier ledit espace creux participant à délimiter la cavité 108 ou l'une des cavités 108.

De manière générale, la quatrième partie 117, les bras 119 et les têtes 120 d'aspiration comportent chacune respectivement une portion de la première partie 104, une portion de la deuxième partie 105 et une portion de la troisième partie 107.

De préférence, les bras 119 et la quatrième partie 117 sont creux, ils comportent donc chacun un espace creux qui peut participer à délimiter la cavité 108 ou l'une des cavités 108. La quatrième partie 117 comporte l'ouverture 112 ménagée au travers de la première partie 104 notamment selon son épaisseur. Dans ce cas, l'espace creux de chaque tête 120 d'aspiration est en communication fluidique avec l'espace creux du bras 117 au bout duquel la tête 120 d'aspiration est agencée, et l'espace creux de chaque bras 119 est en communication fluidique avec l'espace creux de la quatrième partie 117 d'où il résulte au final que chaque orifice 106 est en communication fluidique avec l'ouverture 112. C'est notamment ce qui est représenté dans l'exemple de la figure 4 où le caisson 102 d'aspiration comporte à titre d'exemple quatre bras 119. Autrement dit, pour chaque tête 120 d'aspiration, l'intérieur de ladite tête 120 d'aspiration est en communication fluidique avec l'intérieur du bras 119 au bout duquel ladite tête 120 d'aspiration est agencée et avec l'intérieur de la quatrième partie 117 de sorte que chaque orifice 106 est en communication fluidique avec l'ouverture 112. Ceci présente l'avantage de pouvoir utiliser un seul dispositif 103 de génération de vide couplé à l'ouverture 112 pour générer une aspiration au niveau de chaque tête 120 d'aspiration.

Selon un exemple non représenté où les bras 119 ne sont pas creux, la première partie 104 peut comporter autant d'ouvertures 112 que de têtes 120 d'aspiration, et chaque ouverture 112 débouche dans l'espace creux (formant alors une cavité correspondante) d'une des têtes 120 d'aspiration. Dans ce cas, chaque ouverture 112 peut être destinée à être couplée avec un dispositif 103 de génération de vide qui lui est propre ou avec un dispositif 103 de génération de vide commun à toutes les ouvertures 112.

En figures 4 et 5, le caisson 102 d'aspiration est tout particulièrement adapté, du fait de sa forme générale en croix, pour permettre au préhenseur 101 de saisir un objet de type carton dans des angles, c'est-à-dire des coins, d'une même face du carton d'où il résulte une saisie optimisée permettant un meilleur maintien du carton par les angles de sa face saisie, notamment lorsque le carton est abimé ou déformé au centre de sa face saisie par le préhenseur 101. Par ailleurs, cela présente l'avantage de limiter la surface d'aspiration du préhenseur 101 au strict nécessaire pour permettre la préhension afin de limiter l'énergie d'aspiration nécessaire pour la préhension. Ainsi, le caisson 102 d'aspiration peut comporter quatre bras 119, deux des bras 119 étant coaxiaux selon un premier axe et deux autres des bras 119 étant coaxiaux selon un deuxième axe. Les premier et deuxième axes forment un angle entre eux, de préférence les premier et deuxième axes sont orthogonaux entre eux.

L'invention est aussi relative au préhenseur 101 comportant le caisson 102 d'aspiration tel que décrit précédemment. Le préhenseur 101 comporte éventuellement le dispositif 103 de génération de vide configuré pour aspirer l'intérieur du caisson 102 d'aspiration afin de créer une dépression au niveau d'une pluralité, ou de chacun, des orifices 106. Le préhenseur 101 comporte au moins un organe 121 destiné à venir au contact d'au moins un objet 1000 à saisir, ledit organe 121 étant fixé sur la deuxième partie 105 bien entendu à l'extérieur du caisson 102 d'aspiration et de préférence à l'opposé de la deuxième face 111. Bien entendu, un tel préhenseur 101 peut présenter les avantages tels que décrit précédemment dans le cadre du caisson 102 d'aspiration. De manière générale, un tel préhenseur 101 est robuste et léger.

Il a en particulier été décrit la préhension d'un objet 1000 par le préhenseur 101, mais ce préhenseur 101 peut aussi permettre la préhension de plusieurs objets 1000 à la fois notamment grâce à un organe 121 ou à plusieurs organes 121.

L'organe 121 peut être : une ventouse (non représentée) par exemple couplée à l'un des orifices 106 qui permet de faire le vide dans la ventouse lorsqu'elle est au contact de l'objet 1000 à saisir ; une mousse ajourée ; une plaque de caoutchouc ajourée ; ou une plaque de silicone ajourée.

Sur les figures 1 à 5, l'organe 121 (figures 1, 2 et 3) ou chaque organe 121 (figures 4 et 5 montrant quatre organes 121) représenté est une mousse ajourée, une plaque de caoutchouc ajourée ou une plaque de silicone ajourée qui présente notamment l'avantage de pouvoir se déformer lors de la préhension pour épouser une surface de l'objet 1000 à saisir. En particulier, dans ce cas par « ajourée », il est entendu que l'organe 121 ou chaque organe 121 comporte des trous 122 débouchants agencés chacun pour être en communication fluidique avec un des orifices 106. Par exemple, l'organe 121 ou chaque organe 121 peut être fixé au caisson 102 d'aspiration par un film 123 autocollant double face muni de trous 124 débouchants coïncidant chacun avec un des trous 122 débouchants de l'organe 121 ou de l'un des organes 121.

Concernant le dispositif 103 de génération de vide, il en existe différents types qui sont bien connus de l'homme du métier. Par exemple, le dispositif 103 de génération de vide peut fonctionner selon le principe d'une pompe à vide venturi. Dans ce cas, le dispositif 103 de génération de vide peut comporter une cartouche venturi comportant une première entrée destinée à recevoir de l'air comprimé généré par un compresseur 125 et acheminé par un tuyau 126 (figure 1), une deuxième une entrée en communication fluidique avec l'intérieur (la cavité 108) du caisson 102 d'aspiration notamment via l'ouverture 112, et un mélangeur permettant l'évacuation d'air vers l'extérieur de la cartouche venturi. La cartouche venturi comporte une buse à sa première entrée, la buse étant destinée à être alimentée par l'air comprimé issu du compresseur 125. La deuxième entrée est agencée pour déboucher dans la cartouche venturi entre la buse et le mélangeur de sorte que le jet d'air en sortie de la buse entraîne l'air présent dans le caisson 102 d'aspiration vers le mélangeur qui permet l'évacuation de l'air provenant de la buse et de l'air provenant du caisson 102 d'aspiration. Alternativement le dispositif 103 de génération de vide peut être une pompe à vide ou une turbine de dépression, dans ces alternatives le dispositif 103 de génération de vide peut être séparé du préhenseur 101 et être relié au préhenseur 101 par un tuyau par exemple couplé à l'ouverture 112. Lorsque le dispositif 103 de génération de vide fonctionne selon le principe d'une pompe à vide venturi, il peut aussi être couplé au caisson102 d'aspiration par un tuyau.

Le caisson 102 d'aspiration peut comporter des trous 127 de fixation pouvant servir, en particulier à l'aide de boulons :
- à la fixation du caisson 102 d'aspiration à un support appartenant à l'organe 118 mobile, et/ou
- à la fixation du dispositif 103 de génération de vide au caisson 102 d'aspiration ou d'un tuyau au caisson 102 d'aspiration, le tuyau provenant du dispositif 103 de génération de vide et étant couplé au caisson 102 d'aspiration pour en aspirer l'intérieur.

Ces trous 127 de fixation traversent le caisson 102 d'aspiration et notamment la première partie 104, la deuxième partie 105 et la troisième partie 107.

Bien entendu, l'invention est aussi relative au dispositif 100 de manutention qui comporte l'organe 118 mobile et le préhenseur 101 tel que décrit, le préhenseur 101 étant monté sur l'organe 118 mobile notamment par tout moyen de fixation adapté. Un tel dispositif 100 de manutention est avantageux notamment dans le sens où il peut consommer moins d'énergie, être adapté à l'usage dans le domaine de la robotique en général et de la collaboration ou coopération homme-robot. Bien entendu, le dispositif 100 de manutention peut comporter le dispositif 103 de génération de vide par exemple monté sur ou couplé à la première partie 104 sur une face de la première partie 104 opposée à la première face 110.

L'invention est aussi relative à un procédé de fabrication du caisson 102 d'aspiration. Ce procédé de fabrication comporte une étape de formation de la première partie 104 par exemple par usinage d'une plaque, une étape de formation de la deuxième partie 105 par exemple par usinage d'une plaque, une étape de formation de la troisième partie 107, et une étape d'assemblage des première, deuxième et troisième parties 104, 105, 107 d'où il résulte la formation de ladite au moins une cavité 108. L'étape d'assemblage comporte une étape de fixation de la première partie 104 à la troisième partie 107 par collage et une étape de fixation de la deuxième partie 105 à la troisième partie 107 par collage. Un tel procédé de fabrication permet de fabriquer rapidement et aisément, par exemple à l'aide d'un encollage adapté utilisant par exemple de la colle époxy ou de la résine époxy, le caisson 102 d'aspiration de sorte à ce qu'il soit robuste et léger sans nécessiter d'utiliser des vis ou des rivets ce qui obligerait à de nombreux perçages qui induisent une fragilisation du caisson 102 d'aspiration et une augmentation de son poids par rapport à la présente invention. Le collage permet de simplifier la fabrication tout en réduisant le temps nécessaire à l'assemblage des première, deuxième et troisième parties 104, 105, 107. En outre, le collage assure une étanchéité du caisson 102 d'aspiration entre la première partie 104 et la troisième partie 107 ainsi qu'entre la deuxième partie 105 et la troisième partie 107.

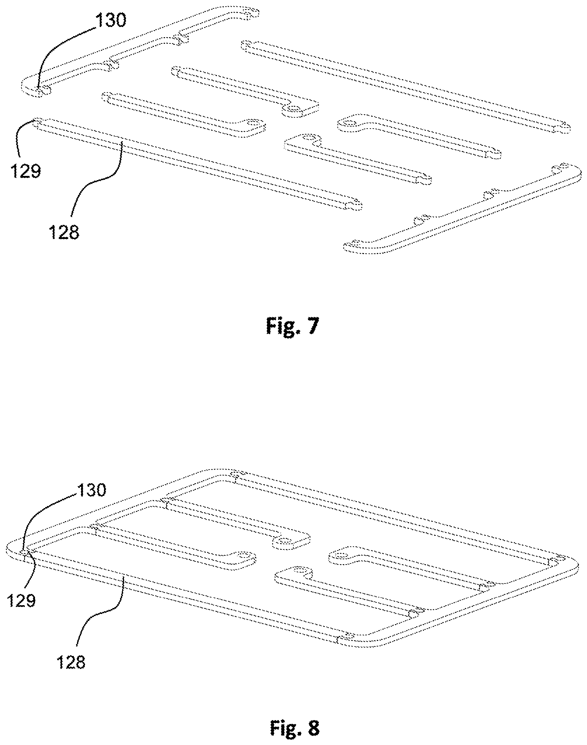

Selon une réalisation du procédé de fabrication, ce dernier peut comporter une étape de formation d'éléments 128 par exemple tels qu'illustrés en figure 7 pour former la troisième partie 107 du type de celle utilisée pour fabriquer le caisson 102 d'aspiration visible en figures 2 et 3. Ces éléments 128 sont destinés à être assemblés pour former la troisième partie 107. Ainsi, le procédé de fabrication comporte en outre une étape d'assemblage des éléments 128 pour former la troisième partie 107. Ceci permet de former la troisième partie 108 en limitant la perte de matière dans le sens où les éléments 128 peuvent être formés par découpe dans une plaque de matériau composite qui peut alors être de dimensions inférieures aux dimensions de la troisième partie 107 ou encore par impression 3D aussi appelée fabrication additive. Dans l'exemple représenté en figure 7, les éléments 128 sont par exemple au nombre de huit et sont assemblés deux à deux (figure 8) par emboitement et notamment collage de préférence par une résine époxy, d'une partie 129 mâle dans une partie 130 femelle. Ceci présentant l'avantage de garantir un positionnement précis des éléments 128 et de garantir la qualité tout en simplifiant l'assemblage.

Dans le cadre du caisson 102 d'aspiration, si la troisième partie 107 comporte un assemblage de plusieurs éléments 128, par exemple assemblés de la manière décrite ci-dessus, ce dernier présente l'avantage d'avoir un coût limité.

Tout ce qui s'applique au procédé de fabrication du caisson 102 d'aspiration peut bien entendu s'appliquer au caisson 102 d'aspiration et inversement tout ce qui s'applique au caisson 102 d'aspiration peut bien entendu s'appliquer au procédé de fabrication du caisson 102 d'aspiration.

Ainsi, la présente invention trouve clairement une application industrielle dans le domaine de la fabrication de caissons d'aspiration ou dans la manutention d'objets dans un processus industriel par exemple et de manière non limitative dans le domaine de l'usage de robots en particulier collaboratifs.

## Revendications

1. Caisson (102) d'aspiration pour un préhenseur (101), le caisson (102) d'aspiration comportant :
- une première partie (104) en matériau composite,
- une deuxième partie (105) en matériau composite, la deuxième partie (105) comportant des orifices (106), et
- une troisième partie (107) reliée, d'une part, à la première partie (104) et, d'autre part, à la deuxième partie (105) pour former au moins une cavité (108) du caisson (102) d'aspiration,
la première partie (104) et la troisième partie (107) étant reliées entre elles par collage, la deuxième partie (105) et la troisième partie (107) étant reliées entre elles par collage ; **caractérisé en ce que** la troisième partie (107) est en matériau composite, et **en ce que** la troisième partie (107) comporte une boucle (109) fermée s'étendant à la périphérie d'une première face (110) de la première partie (104) et à la périphérie d'une deuxième face (111) de la deuxième partie (105), la première face (110) étant orientée vers la deuxième face (111), la première partie (104) étant fixée à la boucle (109) fermée par collage et la deuxième partie (105) étant fixée à la boucle (109) fermée par collage.

2. Caisson (102) d'aspiration selon la revendication 1, **caractérisé en ce que** la première partie (104) et la deuxième partie (105) se présentent chacune sous la forme d'une plaque et **en ce que** la troisième partie (107) est une plaque trouée.

3. Caisson (102) d'aspiration selon l'une quelconque des revendications 1 à 2, **caractérisé en ce que** :
- le matériau composite de la troisième partie (107) comporte une matrice et des fibres, et/ou
- le matériau composite de la première partie (104) comporte une matrice et des fibres, et/ou
- le matériau composite de la deuxième partie (105) comporte une matrice et des fibres.

4. Caisson (102) d'aspiration selon la revendication 3, **caractérisé en ce que** chaque fibre est choisie parmi : une fibre de carbone, une fibre de verre et une fibre d'aramide.

5. Caisson (102) d'aspiration selon l'une quelconque des revendications précédentes, **caractérisé en ce que** la première partie (104) et la troisième partie (107) sont collées par une résine époxy ou par une colle époxy, et **en ce que** la deuxième partie (105) et la troisième partie (107) sont collées par une résine époxy ou par une colle époxy.

6. Caisson (102) d'aspiration selon l'une quelconque des revendications précédentes, **caractérisé en ce que** les première, deuxième et troisième parties (104, 105, 107) sont agencées de sorte que le caisson (102) d'aspiration comporte :
- une quatrième partie (117),
- des bras (119) s'étendant chacun depuis la quatrième partie (117),
- des têtes (120) d'aspiration creuses, chaque tête (120) d'aspiration étant agencée au bout d'un des bras (119) à l'opposé de la quatrième partie (117) et chaque tête (120) d'aspiration comportant une partie des orifices (106).

7. Caisson (102) d'aspiration selon la revendication 6, **caractérisé en ce que** :
- la quatrième partie (117) et les bras (119) sont creux,
- la quatrième partie (117) comporte une ouverture (112) ménagée au travers de la première partie (104), et
- pour chaque tête (120) d'aspiration, l'intérieur de la tête (120) d'aspiration est en communication fluidique avec l'intérieur du bras (119) au bout duquel ladite tête (120) d'aspiration est agencée et avec l'intérieur de la quatrième partie (117) de sorte que chaque orifice (106) est en communication fluidique avec l'ouverture (112).

8. Caisson (102) d'aspiration selon l'une quelconque des revendications 1 à 6, **caractérisé en ce qu'**au moins un des orifices (106) débouche dans ladite au moins une cavité (108) et **en ce que** la première partie (104) comporte une ouverture (112) communiquant avec ladite au moins une cavité (108).

9. Caisson (102) d'aspiration selon l'une quelconque des revendications précédentes, **caractérisé en ce que** la troisième partie (107) comporte un assemblage de plusieurs éléments (128).

10. Caisson (102) d'aspiration selon l'une quelconque des revendications 1 à 9, dans lequel la boucle (109) fermée forme une bordure extérieure de la troisième partie (107) et une paroi latérale du caisson (102) d'aspiration.

11. Caisson (102) d'aspiration selon l'une quelconque des revendications 1 à 10, dans lequel la troisième partie (107) comprend un ou plusieurs renforts (114) s'étendant sous la forme de branches depuis la boucle (109) fermée.

12. Préhenseur (101), **caractérisé en ce qu'**il comporte :
- un caisson (102) d'aspiration selon l'une quelconque des revendications 1 à 11,
- au moins un organe (121) destiné à venir au contact d'au moins un objet (1000) à saisir, ledit organe (121) étant fixé sur la deuxième partie (105).

13. Dispositif (100) de manutention, **caractérisé en ce qu'**il comporte un organe (118) mobile et un préhenseur (101) selon la revendication 12, le préhenseur (101) étant monté sur l'organe (118) mobile.

14. Procédé de fabrication d'un caisson (102) d'aspiration pour un préhenseur (101), le procédé de fabrication comportant les étapes suivantes :
- une étape de formation d'une première partie (104) en matériau composite,
- une étape de formation d'une deuxième partie (105) en matériau composite, la deuxième partie (105) comportant des orifices (106),
- une étape de formation d'une troisième partie (107),
- une étape d'assemblage des première, deuxième et troisième parties (104, 105, 107) d'où il résulte une formation d'au moins une cavité (108) du caisson (102) d'aspiration, l'étape d'assemblage comportant une étape de fixation de la première partie (104) à la troisième partie (107) par collage et une étape de fixation de la deuxième partie (105) à la troisième partie (107) par collage, **caractérisé en ce que** la troisième partie (107) est en matériau composite, et **en ce que** la troisième partie (107) comporte une boucle (109) fermée s'étendant à la périphérie d'une première face (110) de la première partie (104) et à la périphérie d'une deuxième face (111) de la deuxième partie (105), la première face (110) étant orientée vers la deuxième face (111), la première partie (104) étant fixée à la boucle (109) fermée par collage et la deuxième partie (105) étant fixée à la boucle (109) fermée par collage.

15. Procédé de fabrication selon la revendication 14, **caractérisé en ce qu'**il comporte une étape de formation d'éléments (128) destinés à être assemblés pour former la troisième partie (107) et une étape d'assemblage des éléments (128) pour former la troisième partie (107), lesdits éléments (128) étant formés par découpe d'une plaque de matériau composite ou par fabrication additive.

## Patentansprüche

1. Saugkasten (102) für einen Greifer (101), wobei der Saugkasten (102) Folgendes aufweist:
- einen ersten Teil (104) aus Verbundmaterial,
- einen zweiten Teil (105) aus Verbundmaterial, wobei der zweite Teil (105) Öffnungen (106) aufweist, und
- einen dritten Teil (107), der einerseits mit dem ersten Teil (104) und andererseits mit dem zweiten Teil (105) verbunden ist, um mindestens einen Hohlraum (108) des Saugkastens (102) zu bilden,
wobei der erste Teil (104) und der dritte Teil (107) durch Kleben miteinander verbunden sind, wobei der zweite Teil (105) und der dritte Teil (107) durch Kleben miteinander verbunden sind; **dadurch gekennzeichnet, dass** der dritte Teil (107) aus Verbundmaterial besteht, und dass der dritte Teil (107) eine geschlossene Schlaufe (109) aufweist, die sich am Umfang einer ersten Seite (110) des ersten Teils (104) und am Umfang einer zweiten Seite (111) des zweiten Teils (105) erstreckt, wobei die erste Seite (110) zur zweiten Seite (111) ausgerichtet ist, wobei der erste Teil (104) durch Kleben an der geschlossenen Schlaufe (109) befestigt ist und der zweite Teil (105) durch Kleben an der geschlossenen Schlaufe (109) befestigt ist.

2. Saugkasten (102) nach Anspruch 1, **dadurch gekennzeichnet, dass** der erste Teil (104) und der zweite Teil (105) jeweils in Form einer Platte vorliegen und dass der dritte Teil (107) eine Lochplatte ist.

3. Saugkasten (102) nach einem der Ansprüche 1 bis 2, **dadurch gekennzeichnet, dass**:
- das Verbundmaterial des dritten Teils (107) eine Matrix und Fasern aufweist, und/oder
- das Verbundmaterial des ersten Teils (104) eine Matrix und Fasern aufweist, und/oder
- das Verbundmaterial des zweiten Teils (105) eine Matrix und Fasern aufweist.

4. Saugkasten (102) nach Anspruch 3, **dadurch gekennzeichnet, dass** jede Faser ausgewählt ist aus: einer Kohlefaser, einer Glasfaser und einer Aramidfaser.

5. Saugkasten (102) nach einem der vorhergehenden Ansprüche, **dadurch gekennzeichnet, dass** der erste Teil (104) und der dritte Teil (107) mit einem Epoxidharz oder mit einem Epoxidkleber verklebt sind, und dass der zweite Teil (105) und der dritte Teil (107) mit einem Epoxidharz oder mit einem Epoxidkleber verklebt sind.

6. Saugkasten (102) nach einem der vorhergehenden Ansprüche, **dadurch gekennzeichnet, dass** der erste, der zweite und der dritte Teil (104, 105, 107) so angeordnet sind, dass der Saugkasten (102) Folgendes aufweist:
- einen vierten Teil (117),
- Arme (119), die sich jeweils aus dem vierten Teil (117) erstrecken,
- hohle Saugköpfen (120), wobei jeder Saugkopf (120) am Ende eines der Arme (119) gegenüber dem vierten Teil (117) angeordnet ist und jeder Saugkopf (120) einen Teil der Öffnungen (106) aufweist.

7. Saugkasten (102) nach Anspruch 6, **dadurch gekennzeichnet, dass**:
- der vierte Teil (117) und die Arme (119) hohl sind,
- der vierte Teil (117) eine Öffnung (112) aufweist, die durch den ersten Teil (104) hindurch ausgebildet ist, und
- bei jedem Saugkopf (120) das Innere des Saugkopfs (120) in fluidischer Verbindung mit dem Inneren des Arms (119), an dessen Ende der Saugkopf (120) angeordnet ist, und mit dem Inneren des vierten Teils (117) steht, so dass jede Öffnung (106) in fluidischer Verbindung mit der Öffnung (112) steht.

8. Saugkasten (102) nach einem der Ansprüche 1 bis 6, **dadurch gekennzeichnet, dass** mindestens eine der Öffnungen (106) in den mindestens einen Hohlraum (108) mündet und dass der erste Teil (104) eine Öffnung (112) aufweist, die mit dem mindestens einen Hohlraum (108) in Verbindung steht.

9. Saugkasten (102) nach einem der vorhergehenden Ansprüche, **dadurch gekennzeichnet, dass** der dritte Teil (107) eine Baugruppe aus mehreren Elementen (128) aufweist.

10. Saugkasten (102) nach einem der Ansprüche 1 bis 9, wobei die geschlossene Schlaufe (109) eine Außenkante des dritten Teils (107) und eine Seitenwand des Saugkastens (102) bildet.

11. Saugkasten (102) nach einem der Ansprüche 1 bis 10, wobei der dritte Teil (107) eine oder mehrere Verstärkungen (114) umfasst, die sich in Form von Schenkeln von der geschlossenen Schleife (109) aus erstrecken.

12. Greifer (101), **dadurch gekennzeichnet, dass** er Folgendes aufweist:
- einen Saugkasten (102) nach einem der Ansprüche 1 bis 11,
- mindestens ein Organ (121), das dazu bestimmt ist, mit mindestens einem zu greifenden Objekt (1000) in Berührung zu kommen, wobei das Organ (121) am zweiten Teil (105) befestigt ist.

13. Handhabungsvorrichtung (100), **dadurch gekennzeichnet, dass** sie ein bewegliches Organ (118) und einen Greifer (101) nach Anspruch 12 aufweist, wobei der Greifer (101) an dem beweglichen Organ (118) montiert ist.

14. Verfahren zur Herstellung eines Saugkastens (102) für einen Greifer (101), wobei das Herstellungsverfahren die folgenden Schritte aufweist:
- einen Schritt des Bildens eines ersten Teils (104) aus Verbundmaterial,
- einen Schritt des Bildens eines zweiten Teils (105) aus Verbundmaterial, wobei der zweite Teil (105) Öffnungen (106) aufweist,
- einen Schritt des Bildens eines dritten Teils (107),
- einen Schritt des Montierens des ersten, des zweiten und des dritten Teils (104, 105, 107), aus dem sich das Bilden von mindestens einem Hohlraum (108) des Saugkastens (102) ergibt, wobei der Montageschritt einen Schritt des Befestigens des ersten Teils (104) am dritten Teil (107) durch Kleben und einen Schritt des Befestigens des zweiten Teils (105) am dritten Teil (107) durch Kleben aufweist, **dadurch gekennzeichnet, dass** der dritte Teil (107) aus Verbundmaterial besteht, und dass der dritte Teil (107) eine geschlossene Schlaufe (109) aufweist, die sich am Umfang einer ersten Seite (110) des ersten Teils (104) und am Umfang einer zweiten Seite (111) des zweiten Teils (105) erstreckt, wobei die erste Seite (110) zur zweiten Seite (111) ausgerichtet ist, wobei der erste Teil (104) durch Kleben an der geschlossenen Schlaufe (109) befestigt ist und der zweite Teil (105) durch Kleben an der geschlossenen Schlaufe (109) befestigt ist.

15. Herstellungsverfahren nach Anspruch 14, **dadurch gekennzeichnet, dass** es einen Schritt des Bildens von Elementen (128), die zusammengefügt werden sollen, um den dritten Teil (107) zu bilden, und einen Schritt des Montierens der Elemente (128), um den dritten Teil (107) zu bilden, aufweist, wobei die Elemente (128) durch Zuschneiden einer Platte aus Verbundmaterial oder durch additive Fertigung gebildet werden.

## Claims

1. A suction box (102) for a gripper (101), the suction box (102) including:
- a first part (104) made of composite material,
- a second part (105) made of composite material, the second part (105) including orifices (106), and
- a third part (107) connected, on the one hand, to the first part (104) and, on the other hand, to the second part (105) to form at least one cavity (108) of the suction box (102),
the first part (104) and the third part (107) being connected to each other by bonding, the second part (105) and the third part (107) being connected to each other by bonding; **characterized in that** the third part (107) is made of composite material, and **in that** the third part (107) includes a closed loop (109) extending at the periphery of a first face (110) of the first part (104) and at the periphery of a second face (111) of the second part (105), the first face (110) being oriented towards the second face (111), the first part (104) being fastened to the closed loop (109) by bonding and the second part (105) being fastened to the closed loop (109) by bonding.

2. The suction box (102) according to claim 1, **characterized in that** the first part (104) and the second part (105) are each in the form of a plate, and **in that** the third part (107) is a perforated plate.

3. The suction box (102) according to any one of claims 1 to 2, **characterized in that**:
- the composite material of the third part (107) includes a matrix and fibers, and/or
- the composite material of the first part (104) includes a matrix and fibers, and/or
- the composite material of the second part (105) includes a matrix and fibers.

4. The suction box (102) according to claim 3, **characterized in that** each fiber is selected from: a carbon fiber, a glass fiber and an aramid fiber.

5. The suction box (102) according to any one of the preceding claims, **characterized in that** the first part (104) and the third part (107) are bonded with an epoxy resin or with an epoxy adhesive, and **in that** the second part (105) and the third part (107) are bonded with an epoxy resin or with an epoxy adhesive.

6. The suction box (102) according to any one of the preceding claims, **characterized in that** the first, second, and third parts (104, 105, 107) are arranged so that the suction box (102) includes:
- a fourth part (117),
- arms (119) each extending from the fourth part (117),
- hollow suction heads (120), each suction head (120) being arranged at the end of one of the arms (119) opposite the fourth part (117) and each suction head (120) including a part of the orifices (106).

7. The suction box (102) according to claim 6, **characterized in that**:
- the fourth part (117) and the arms (119) are hollow,
- the fourth part (117) includes an opening (112) provided through the first part (104), and
- for each suction head (120), the interior of the suction head (120) is in fluidic communication with the interior of the arm (119) at the end of which said suction head (120) is arranged and with the interior of the fourth part (117) so that each orifice (106) is in fluidic communication with the opening (112).

8. The suction box (102) according to any one of claims 1 to 6, **characterized in that** at least one of the orifices (106) opens into said at least one cavity (108) and **in that** the first part (104) includes an opening (112) communicating with said at least one cavity (108).

9. The suction box (102) according to any one of the preceding claims, **characterized in that** the third part (107) includes an assembly of several elements (128).

10. The suction box (102) according to any one of claims 1 to 9, wherein the closed loop (109) forms an outer edge of the third part (107) and a lateral wall of the suction box (102).

11. The suction box (102) according to any one of claims 1 to 10, wherein the third part (107) comprises one or several reinforcements (114) extending in the form of branches from the closed loop (109).

12. A gripper (101), **characterized in that** it includes:
- a suction box (102) according to any one of claims 1 to 11,
- at least one member (121) intended to come into contact with at least one object (1000) to be grasped, said member (121) being fastened on the second part (105).

13. A handling device (100), **characterized in that** it includes a movable member (118) and a gripper (101) according to claim 12, the gripper (101) being mounted on the movable member (118).

14. A method for manufacturing a suction box (102) for a gripper (101), the manufacturing method including the following steps:
- a step of forming a first part (104) made of composite material,
- a step of forming a second part (105) made of composite material, the second part (105) including orifices (106),
- a step of forming a third part (107),
- a step of assembling the first, second, and third parts (104, 105, 107) resulting in the formation of at least one cavity (108) of the suction box (102), the assembly step including a step of fastening the first part (104) to the third part (107) by bonding and a step of fastening the second part (105) to the third part (107) by bonding, **characterized in that** the third part (107) is made of composite material, and **in that** the third part (107) includes a closed loop (109) extending at the periphery of a first face (110) of the first part (104) and at the periphery of a second face (111) of the second part (105), the first face (110) being oriented towards the second face (111), the first part (104) being fastened to the closed loop (109) by bonding, and the second part (105) being fastened to the closed loop (109) by bonding.

15. The manufacturing method according to claim 14, **characterized in that** it includes a step of forming elements (128) intended to be assembled to form the third part (107) and a step of assembling the elements (128) to form the third part (107), said elements (128) being formed by cutting a composite material plate or by additive manufacturing.
